# FASCICULE DE BREVET EUROPEEN

(11) **EP 2 163 449 B1**
(45) Date de publication et mention de la délivrance du brevet: **09.08.2017**
(21) Numéro de dépôt: 09305857.6
(22) Date de dépôt: 16.09.2009
(51) Int. Cl.: B60W 30/16, B60W 30/18, B60W 40/10, B60K 31/00, B60W 50/08, B60W 10/06

(54) **Système d'optimisation de la consommation de carburant pour véhicule automobile à base de mesures de distances et/ou de vitesses du véhicule précédant le véhicule équipé**
System zur Optimierung des Kraftstoffverbrauchs für Kraftfahrzeug durch das Messen der Abstände und/oder Geschwindigkeiten des Fahrzeugs vor dem damit ausgerüsteten Fahrzeug
System for optimising fuel consumption for an automobile vehicle based on measuring distances and/or speeds of the vehicle preceding the equipped vehicle

(30) Priorité: 16.09.2008 FR 0856221
(43) Date de publication de la demande: 17.03.2010
(73) Titulaire: Renault S.A.S., 92100 Boulogne-Billancourt (FR)
(72) Inventeur: Ayma, Vincent, 75015, PARIS (FR)

(56) Documents cités:
- WO-A1-2006/075114
- DE-A1- 10 320 009
- US-A- 6 095 945

## Description

L'invention porte sur un système permettant d'optimiser la consommation en carburant d'un véhicule automobile à partir de données issues d'un capteur de détection frontale.

Les capteurs de détection frontale sont généralement utilisés pour des applications de confort de conduite comme, par exemple, dans le cas d'un système de régulation de vitesse permettant de stabiliser la vitesse d'un véhicule automobile automatiquement par rapport à une voiture précédent le véhicule équipé du capteur de détection frontale, ou bien dans le cas d'un limitateur de vitesse permettant de fixer une vitesse maximale à ne pas dépasser.

La consommation en carburant d'un véhicule automobile est étudiée par les constructeurs automobiles en tenant compte d'un grand nombre de paramètres et pour des systèmes très différents, ceci dans un même but de réduction de consommation. Ainsi, la réduction du poids de pièces mécaniques, ainsi que l'amélioration de l'aérodynamisme des véhicules automobiles permettent de réduire la consommation en carburant d'un véhicule automobile. Les innovations techniques portant sur les moteurs et les boîtes de vitesses, ainsi que des nouvelles stratégies de contrôle moteur permettent également une réduction de la consommation en carburant. Cependant, ces solutions ne prennent pas en compte des données provenant de l'environnement extérieur qui peuvent être recueillies pour améliorer les stratégies de commande du moteur. En particulier, les stratégies de commande du moteur ne tiennent pas compte du comportement des véhicules précédents.

Un capteur de détection frontale est principalement utilisé pour des applications liées au confort ou bien à la sécurité du conducteur et de se passagers, comme dans des systèmes permettant de détecter des situations dangereuses de type collision imminente. Ce type de capteur permet de détecter des véhicules automobiles précédent le véhicule équipé d'un tel capteur, et de mesurer la distance relative entre le capteur et l'objet détecté, et/ou la vitesse relative entre le véhicule porteur et l'objet détecté. Ce capteur réalise également un suivi des objets détectées ; c'est-à-dire que l'objet, une fois détecté, est suivi lors de ces différents déplacements dans le champ de vue du capteur.

Le brevet japonais JP 10 166 894 décrit un dispositif de contrôle de la vitesse du véhicule précédant le véhicule équipé d'un capteur de détection frontale. Ce dispositif comprend des moyens de mesure de la distance entre le véhicule équipé du dispositif et le véhicule le précédant, et des moyens de détection d'un changement de vitesse du véhicule précédant le véhicule équipé. Cependant, le procédé décrit dans ce document est un procédé de régulation de vitesse utilisant les données fournies par le capteur de détection frontale, qui est basée sur une régulation de la vitesse du véhicule équipé du capteur de détection frontale par rapport à la vitesse du véhicule le précédant, en visant à améliorer le confort de conduite du véhicule, particulièrement en lissant les phases d'accélérations. Bien que ce lissage des phases d'accélérations permette d'éviter une consommation excessive de carburant, le procédé n'est pas basé sur une optimisation de la consommation en carburant du véhicule équipé du capteur.

Le document WO 2006/075114 décrit un système de commande du couple moteur comportant un système de mesure de distance à une cible.

L'invention vise à améliorer la consommation en carburant d'un véhicule automobile grâce à un système utilisant les données de l'environnement extérieur fourni par un capteur de détection frontale.

Selon un aspect, il est proposé dans un mode de réalisation, un système de commande du couple moteur d'un véhicule automobile pour l'optimisation de la consommation en carburant dudit véhicule, comprenant au moins un capteur de détection frontale pour la détection d'un véhicule précédant le véhicule équipé dudit système de commande.

Le système comprend des moyens de calcul aptes à déterminer une consigne de couple moteur optimisant la consommation en carburant à partir d'une consigne de couple moteur souhaité par le conducteur et de variables représentatives d'un contexte de roulage issues du capteur de détection frontale.

De préférence, le système comprend des moyens d'arbitrage aptes à selectionner une consigne finale de couple moteur à appliquer parmi une consigne de couple moteur souhaité par le conducteur et la consigne de couple moteur optimisant la consommation de carburant.

Ces moyens d'arbitrage permettent de sélectionner à partir de différentes données de l'environnement extérieur et du véhicule, la consigne finale de couple moteur devant être appliquée, le choix se faisant entre la consigne de couple souhaité par le conducteur, et la consigne de couple moteur optimisant la consommation en carburant.

Le système comprend avantageusement des moyens de conversion aptes à convertir un enfoncement de la pédale d'accélération pour élaborer ladite consigne de couple moteur souhaité par le conducteur.

Les moyens d'arbitrage comprennent préférentiellement des moyens de lissage de la consigne finale de couple moteur aptes à réduire des à-coups lors d'une désactivation du système de commande du couple moteur par le conducteur.

Ainsi, lorsque le système de commande du couple moteur est désactivé, le couple moteur est alors commandé par le conducteur via en outre la pédale d'accélérateur. Les filtres de lissage permettent une reprise en main du véhicule douce en évitant les à-coups dus au changement d'accélération entre la demande du conducteur et la consigne du couple moteur du système de commande.

De préférence, les moyens d'arbitrage comprennent un premier moyen de comparaison apte à comparer la différence entre la consigne de couple moteur souhaité par le conducteur et la consigne du couple moteur optimisant la consommation en carburant par rapport à la volonté du conducteur à une première constante donnée, un second moyen de comparaison apte à comparer la consigne de couple moteur souhaité par le conducteur et la consigne du couple moteur optimisant la consommation en carburant par rapport à la volonté du conducteur, un troisième moyen de comparaison apte à comparer la vitesse d'enfoncement de la pédale à une première vitesse d'enfoncement donnée, et des moyens de détermination d'enfoncement de pédale aptes à déterminer que le conducteur enfonce la pédale d'accélération à une vitesse inférieure à la première vitesse d'enfoncement donnée mais supérieure à une deuxième vitesse d'enfoncement donnée durant au moins deux cycles d'échantillonnage de manière à désactiver le système de commande du couple moteur.

Avantageusement, la consigne finale lissée de couple moteur à appliquer issue des moyens d'arbitrage est transformée en donnée exploitable par des moyens matériels du moteur.

De préférence, le système comprend des moyens de désactivation manuelle aptes à désactiver le système de commande du couple moteur.

Selon un autre aspect, il est proposé dans un mode de mise en oeuvre, un procédé de commande du couple moteur d'un véhicule automobile pour l'optimisation de la consommation en carburant dudit véhicule, dans lequel on détecte un véhicule précédant le véhicule équipé d'un système de commande du couple moteur, on mesure des variables représentatives d'un contexte de roulage du véhicule précédant le véhicule équipé dudit système de commande, on mesure le taux d'enfoncement de la pédale d'accélération, on calcule une consigne de couple moteur souhaité par le conducteur en fonction de la pédale d'accélération, on détermine une consigne de couple moteur optimisant la consommation de carburant par rapport à la volonté du conducteur, et on sélectionne la consigne finale de couple moteur à appliquer parmi la consigne de couple moteur souhaité par le conducteur et la consigne de couple moteur optimisant la consommation de carburant par rapport à la volonté du conducteur.

De préférence, on réalise la sélection de la consigne finale de couple moteur seulement si le véhicule précédant le véhicule équipé dudit système est détecté.

On désactive avantageusement la commande du couple moteur si une condition prédéterminée est satisfaite.

On désactive préférentiellement la commande du couple moteur si la pédale de frein est enfoncée, ou si le clignotant gauche est actionné, ou si la pédale d'accélérateur est enfoncée brusquement, ou si aucun véhicule n'est détecté.

D'autres avantages et caractéristiques de l'invention apparaîtront à l'examen de la description détaillée d'un mode de réalisation de l'invention nullement limitatif, et des dessins annexés, sur lesquels :
- la figure 1 représente, de manière schématique, un système de commande du couple moteur selon un mode de réalisation ;
- la figure 2 représente de manière schématique une première partie des moyens d'arbitrage d'un système de commande du couple moteur selon un mode de réalisation ;
- la figure 3 représente de manière schématique une seconde partie des moyens d'arbitrage d'un système de commande du couple moteur selon un mode de réalisation ;
- la figure 4 illustre une première étape du procédé de commande du couple moteur selon un mode de mise en oeuvre;
- la figure 5 illustre une seconde étape du procédé de commande du couple moteur ;
- la figure 6 illustre une troisième étape du procédé de commande du couple moteur ;
- la figure 7 illustre une quatrième étape du procédé de commande du couple moteur ;
- la figure 8 illustre une cinquième étape du procédé de commande du couple moteur.

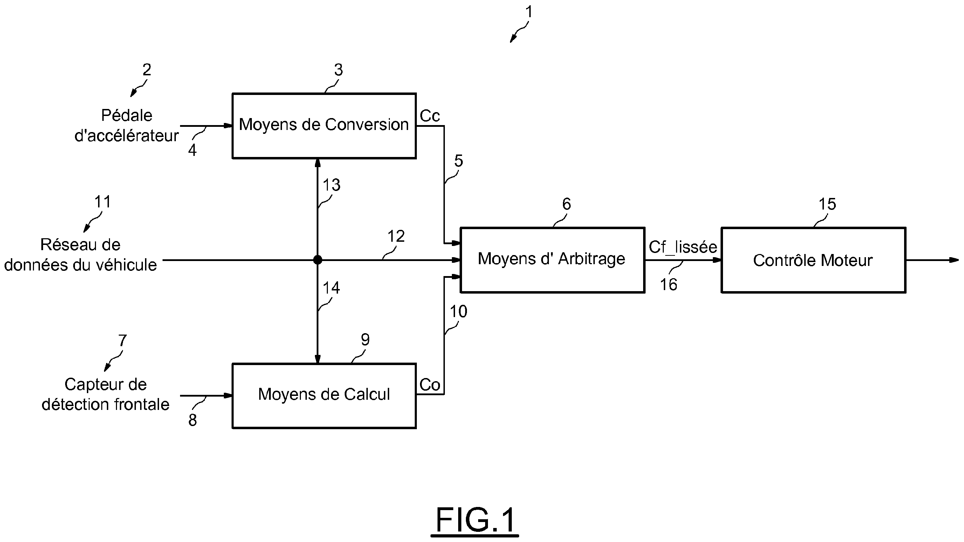

Sur la figure 1, a été représenté de manière schématique un système de commande 1 du couple moteur d'un véhicule automobile permettant de calculer une consigne de couple moteur optimisant la consommation en carburant du véhicule par rapport à la volonté du conducteur.

Le système de commande 1 comprend des moyens de conversion 3 permettant de convertir l'enfoncement de la pédale d'accélérateur 2 en une consigne de couple moteur demandé par le conducteur Cc, des moyens de calcul 9 apte à déterminer une consigne de couple moteur optimisant la consommation en carburant Co, des moyens d'arbitrage 6 permettant de sélectionner une consigne finale Cf de couple moteur à appliquer, et un contrôle moteur 15 permettant de transformer la consigne finale Cf en données exploitables par des moyens matériels du moteur.

Le système de commande 1 du couple moteur reçoit en entrée une consigne d'accélération du conducteur via l'enfoncement de la pédale d'accélérateur 2. Cette consigne est envoyée, via une connexion 4, aux moyens de conversion 3 permettant de convertir l'enfoncement de la pédale d'accélérateur 2 en une consigne de couple conducteur Cc correspondant à la volonté du conducteur, et envoyé via une connexion 5 vers les moyens d'arbitrage 6.

Le système de commande 1 du couple moteur reçoit également en entrée des données de l'environnement extérieur au véhicule recueillies par un capteur de détection frontale 7 indiquant la présence d'un véhicule cible précédent le véhicule porteur du système de commande 1, la distance relative entre le véhicule cible et le véhicule porteur, la vitesse relative entre le véhicule cible et le véhicule porteur, et indiquant la présence potentielle d'autres cibles sur les voies de droite ou de gauche par exemple.

Les données du capteur de détection frontale 7 sont transmises via une connexion 8 aux moyens de calcul 9 permettant de déterminer une consigne de couple optimisé Co par rapport à une stratégie de calcul de consigne de couple moteur optimisant la consommation en carburant. Ce couple optimisé Co est transmis via une connexion 10 aux moyens d'arbitrage 6.

Le système de commande 1 du couple moteur reçoit également en entrée via le réseau de données du véhicule 11, des informations sur le véhicule correspondant à la vitesse du véhicule, l'accélération longitudinale, le rapport engagé, l'enfoncement de la pédale de frein, ainsi que d'autres consignes de sécurité correspondant à l'ABS, l'ESP, etc.

Les informations issues du réseau de données du véhicule 11 sont transmises aux moyens d'arbitrage 6, aux moyens de conversion 3, et aux moyens de calcul 9, à l'aide respectivement des connexions 12, 13, et 14.

Les moyens d'arbitrage 6 permettent de sélectionner la consigne finale Cf de couple moteur devant être appliquée entre la consigne de couple conducteur Cc issue des moyens de conversion 3 représentant la volonté du conducteur, et la consigne de couple optimisé Co calculée par les moyens de calcul 9. La consigne finale Cf est lissée afin d'obtenir une consigne finale lissée Cf_lissée du couple moteur avant d'être transmise au contrôle moteur 15 via la connexion 16 et transformée via le contrôle moteur 15 en donnée exploitable par des moyens matériels du moteur.

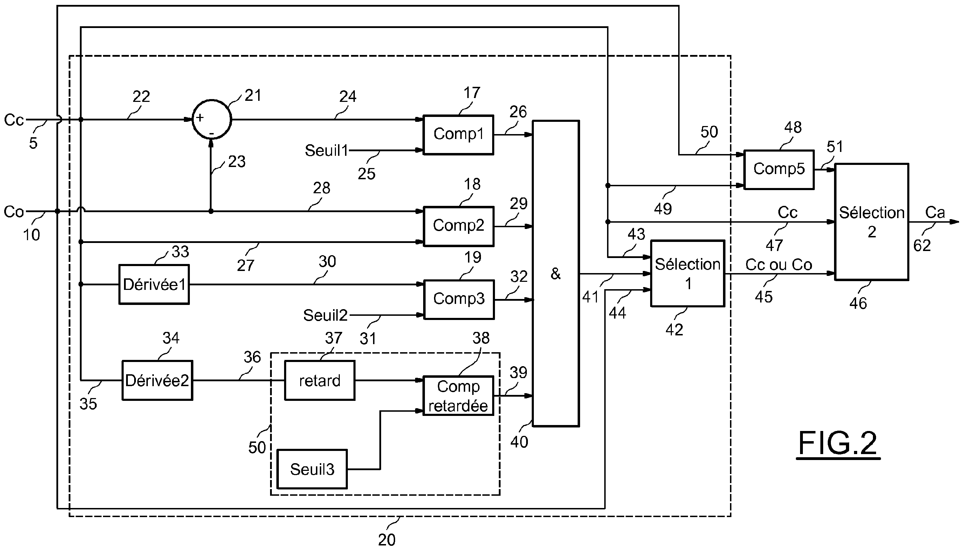

Sur la figure 2, est représentée une première partie des moyens d'arbitrage 6 comprenant des moyens stratégiques 20 de réduction de la consommation en carburant d'un véhicule automobile, recevant en entrée la consigne de couple optimisé Co via la connexion 10 et la consigne de couple conducteur Cc via la connexion 5.

Les moyens stratégiques 20 comprennent des moyens de soustraction 21 aptes à réaliser la soustraction entre la valeur de la consigne de couple conducteur Cc fourni aux moyens de soustraction 21 via la connexion 22 et la valeur de la consigne de couple optimisé Co fourni aux moyens de soustraction 21 via la connexion 23. Le résultat de la soustraction issu des moyens de soustraction 21 est fourni via une connexion 24 à un premier moyen de comparaison 17 recevant également en entrée une première valeur seuil Seuil1 via une connexion 25. Ce premier moyen de comparaison 17 permet d'évaluer si la différence entre la consigne de couple conducteur Cc et la consigne de couple optimisé Co est supérieure à un seuil. Si cette différence est trop faible et donc inférieure à cette première valeur seuil Seuil1 alors le choix de la consigne de couple conducteur Cc est préféré et un signal de sortie booléen correspondant est délivré via une connexion 26.

Les moyens stratégiques 20 comprennent également un deuxième moyen de comparaison 18 recevant en entrée la consigne de couple conducteur Cc via la connexion 27, et la consigne de couple optimisé Co via la connexion 28. Ce second moyen de comparaison 18 permet de comparer le couple conducteur Cc au couple optimisant la consommation en carburant Co.

Si la consigne de couple conducteur Cc est inférieure à la consigne de couple optimisé Co, alors le choix du couple conducteur Cc est préféré et un signal de sortie booléen correspondant est délivré par le deuxième moyen de comparaison 18 via une connexion 29. En effet, le fait que la consigne de couple conducteur Cc soit inférieure à la consigne de couple optimisé Co indique une volonté de ralentissement voire de freinage de la part du conducteur, et, dans ce cas, la priorité est donnée à la volonté du conducteur, le véhicule ne devant pas accélérer contre la volonté de celui-ci.

Les moyens stratégiques 20 de réduction de la consommation en carburant d'un véhicule automobile comprennent également un troisième moyen de comparaison 19 recevant en entrée la dérivée de la consigne de couple conducteur Cc obtenue à l'aide d'un premier moyen de dérivation 33. Ce premier moyen de dérivation 33 délivre ainsi un signal correspondant à la vitesse d'enfoncement de la pédale d'accélérateur 2. Cette vitesse d'enfoncement de la pédale d'accélérateur 2 est comparée à une deuxième valeur seuil Seuil2 délivrée au troisième moyen de comparaison 19 via une connexion 31. De cette manière, si la vitesse d'enfoncement de la pédale d'accélérateur 2 est supérieure à la deuxième valeur seuil Seuil2 traduisant ainsi une volonté d'accélération du conducteur, alors le choix de la consigne de couple conducteur Cc est préféré et le troisième moyen de comparaison 19 délivre un signal de sortie booléen correspondant via une connexion 32.

La valeur de la consigne de couple conducteur Cc est délivrée via une connexion 35 à un deuxième moyen de dérivation 34 permettant de calculer la vitesse d'enfoncement de la pédale d'accélérateur 2 et délivrant un signal correspondant, via une connexion 36, à des moyens 50 de détermination d'enfoncement de la pédale d'accélération 2. Les moyens 50 de détermination d'enfoncement de la pédale d'accélération 2 comprennent un moyen de retardement 37 du signal recevant en entrée le signal issu du deuxième moyen de dérivation 34, et permettant de délivrer via une connexion 38 le signal correspondant à la vitesse d'enfoncement de la pédale du cycle d'échantillonnage actif et des deux cycles d'échantillonnage précédents par exemple, à des moyens de comparaison retardés 38 qui reçoivent également en entrée une troisième valeur seuil Seuil3. Ces moyens de comparaison retardés 38 permettent de tenir compte d'un enfoncement de la pédale d'accélérateur 2 plus lent que celui déterminé dans le cas du seuil2 avec le troisième comparateur, mais assez important pour signifier une volonté de reprise en main de la commande du couple moteur par le conducteur. En effet, si la vitesse d'enfoncement de la pédale d'accélérateur 2 est supérieure à la troisième valeur seuil Seuil3 pendant trois cycle d'échantillonnage successifs, cela signifie que le conducteur est en train d'enfoncer progressivement la pédale d'accélérateur 2 afin d'accélérer. Dans ce cas, le choix de la consigne de couple conducteur Cc est préféré et les moyens de comparaison retardée 38 délivrent un signal de sortie booléen correspondant via une connexion 39.

Il est bien évidemment possible de réaliser les tests sur deux cycles d'échantillonnage ou plus de trois cycles d'échantillonnage.

Les moyens stratégiques 20 de réduction de la consommation en carburant d'un véhicule comprennent également une unité logique 40 recevant en entrée les signaux booléens issus des comparateurs 17, 18, 19 et 38. L'unité logique 40 délivre en sortie un signal booléen correspondant au choix de la consigne de couple optimisé Co dans le cas où les comparateurs 17, 18, 19 et 38 délivrent tous en entrée un signal correspondant au choix de la consigne de couple optimisé Co. En revanche, si un des comparateurs 17, 18, 19 ou 38 délivre un signal booléen correspondant au choix de la consigne de couple conducteur Cc, alors l'unité logique 40 délivre en sortie un signal correspondant au choix de la consigne de couple conducteur Cc via une connexion 41.

Un premier moyen de sélection 42 reçoit en entrée le signal ainsi délivré par l'unité logique 40 via la connexion 41, et reçoit également en entrée la valeur de la consigne de couple conducteur Cc via une connexion 43 et la valeur de la consigne de couple optimisé Co via une connexion 44. Suivant la valeur du signal booléen transmis par l'unité logique 40 via la connexion 41, le moyen de sélection 42 délivre en sortie la valeur de la consigne de couple conducteur Cc ou la valeur de la consigne de couple optimisé Co. Ce signal de sortie du premier moyen de sélection 42 est transmis, via une connexion 45, à un deuxième moyen de sélection 46 reçevant également en entrée la valeur de la consigne de couple conducteur Cc via une connexion 47.

D'autre part, un cinquième moyen de comparaison 48 reçoit en entrée la valeur de la consigne de couple conducteur Cc via une connexion 49 et la valeur de la consigne de couple optimisé Co via une connexion 50. Ce cinquième moyen de comparaison 48 s'assure que la consigne de couple conducteur Cc est bien supérieure au couple optimisé Co. Si la consigne de couple conducteur Cc est inférieure à la consigne de couple optimisé Co, le choix de la consigne de couple conducteur Cc est préféré et le cinquième moyen de comparaison 48 délivre un signal de sortie booléen correspondant au deuxième moyen de sélection 46 via une connexion 51.

Le deuxième moyen de sélection 46 délivre en sortie, via une connexion 62, une valeur de consigne arbitrée Ca de couple moteur, qui correspond, suivant la valeur délivrée par la connexion 51 du cinquième moyen de comparaison 48, à la valeur de la consigne de couple conducteur Cc ou à la valeur de la consigne de couple optimisé Co.

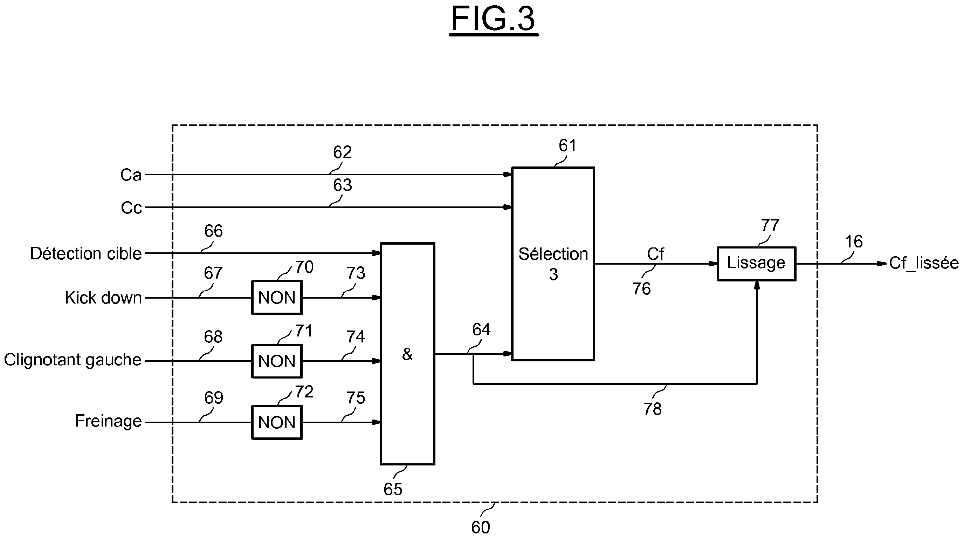

Sur la figure 3, a été représentée une deuxième partie des moyens d'arbitrage 6. Les moyens d'arbitrage 6 comprennent des moyens 60 de reprise en main par le conducteur de la commande du couple moteur.

Ces moyens 60 de reprise en main par le conducteur de la commande du couple moteur comprennent un troisième moyen de sélection 61 recevant en entrée la valeur de la consigne arbitrée Ca de couple moteur via la connexion 62 et la valeur de la consigne de couple conducteur Cc via une connexion 63. Ces moyens de sélection 61 reçoivent également en entrée via une connexion 64, un signal booléen indiquant si une cible a bien été détectée par le capteur de détection frontale 7, s'il n'y a pas eu de kick down, c'est-à-dire d'enfoncement brusque et complet de la pédale d'accélérateur 2 par le conducteur, s'il n'y a pas eu de mise en route du clignotant gauche indiquant une volonté de doubler par exemple et donc une volonté de changement de la commande du moteur par le conducteur, et s'il n'y a pas eu de freinage. Ce signal est délivré par une unité seconde logique 65 recevant en entrée l'information de détection d'une cible via la connexion 66, l'information d'un kick down via la connexion 67, l'information de mise en route du clignotant gauche via la connexion 68, et enfin l'information d'indication d'un freinage du véhicule via la connexion 69. Ces trois dernières informations subissant toutes une opération logique de négation, via des moyens de négation 70, 71 et 72 délivrant via des connexions respectives 73, 74, 75 les signaux résultant à la seconde unité logique 65.

Le troisième moyen de sélection 61 délivre en sortie une consigne finale Cf de couple moteur à appliquer correspondant à la consigne arbitrée Ca de couple moteur ou à la consigne de couple conducteur Cc. Si une cible a été détectée par le capteur de détection frontale 7, et qu'il n'y a pas eu de kick down de la part du conducteur, ni de mise en route du clignotant gauche ou de freinage, alors la seconde unité logique 65 délivre en sortie un signal booléen indiquant au troisième moyen de sélection 61 de délivrer en sortie une consigne finale Cf correspondant à la consigne arbitrée Ca. En revanche, si une des quatre conditions précédentes n'est pas vérifiées, l'unité logique 65 délivre en sortie un signal booléen indiquant au troisième moyen de sélection 61 de délivrer en sortie une consigne finale Cf correspondant à la consigne de couple conducteur Cc.

La consigne finale Cf de couple moteur est ensuite transmise via une connexion 76 à des moyens de lissage 77 qui permettent d'éviter les à-coups lors de la désactivation du système de commande 1 du couple moteur et de la reprise en main de la commande moteur par le conducteur. Les moyens de lissage 77 sont synchronisés sur le front descendant du trigger qui est issu de la sortie de l'unité logique 65, le signal de trigger étant transmis aux moyens de lissage 77 via la connexion 78. Les moyens de lissage 77 délivrent enfin en sortie une consigne finale lissée de couple moteur Cf_lissée correspondant au couple moteur à appliquer, via la connexion 16.

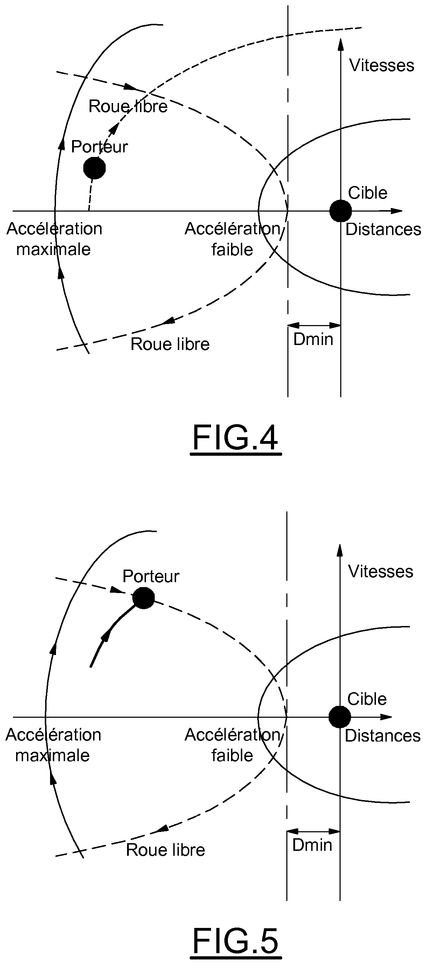

Sur la figure 4, a été représentée une première étape du procédé de commande du couple moteur selon un mode de mise en oeuvre. Ce procédé est basé sur une stratégie permettant d'optimiser la consommation en carburant lorsqu'il y a un suivi d'un véhicule cible. On nommera cible, le véhicule qui est suivi, précédant le véhicule équipé du système nommé porteur.

La stratégie est basée sur la relation entre la vitesse de la cible, la vitesse du porteur et la distance séparant le porteur de la cible.

Sur la figure 4, la cible, située à une distance donnée du porteur, a une vitesse donnée, et le porteur a une vitesse qui est supérieure à la vitesse de la cible. Par souci de sécurité, on décide d'imposer une distance sécuritaire Dmin de suivi correspondant à la distance minimale d'approche qu'on ne veut pas dépasser. La distance sécuritaire Dmin est représentée par une droite verticale réalisée en trait d'axe. Pour chaque point de cette figure, une certaine accélération permet de passer au dessus d'une courbe de roue libre, permettant de revenir vers une distance admissible de suivi tout en optimisant la consommation du véhicule. La courbe de roue libre correspond à l'application d'une consigne de couple moteur optimisé permettant de réduire la consommation en carburant du véhicule porteur. Deux courbes d'accélération ont également été représentées sur cette figure. Une courbe d'accélération maximale correspondant à la distance maximale de suivi entre le porteur et la cible, et une courbe d'accélération faible dans le cas d'une distance plus rapprochée du porteur par rapport à la cible.

Sur cette figure a été représenté un exemple de mise en place de la stratégie pour un enfoncement de la pédale d'accélérateur 2 constant égal à 20%, ce qui correspond à une accélération positive. On considère dans cet exemple que la vitesse est assez faible pour que 20% d'enfoncement de la pédale d'accélérateur correspondent à une accélération non négligeable. Le traitement de cette stratégie est effectué via une cartographie.

La position du véhicule porteur du système au sein de la cartographie est représentée par rapport à la vitesse et la position de la cible. Dans cet exemple, la distance entre la cible et le porteur est assez importante mais admissible pour le système. En effet, la distance porteur-cible est inférieure à la distance correspondant à la courbe d'accélération maximale.

La consigne d'accélération du conducteur va être effectuée jusqu'à un certain point correspondant au croisement de la courbe de roue libre et de la courbe d'accélération d'enfoncement de 20%, représentée en pointillé, pour la vitesse considérée passant par le point représentant la position du porteur sur cette cartographie.

Sur la figure 5, le véhicule porteur se retrouve dans des conditions correspondant pour la cartographie à l'intersection de la courbe d'accélération d'enfoncement de 20% et de la courbe de roue libre. Le conducteur a toujours un enfoncement de pédale de 20%, mais le système de commande 1 va faire suivre à la consigne de couple moteur à appliquer, la courbe de roue libre.

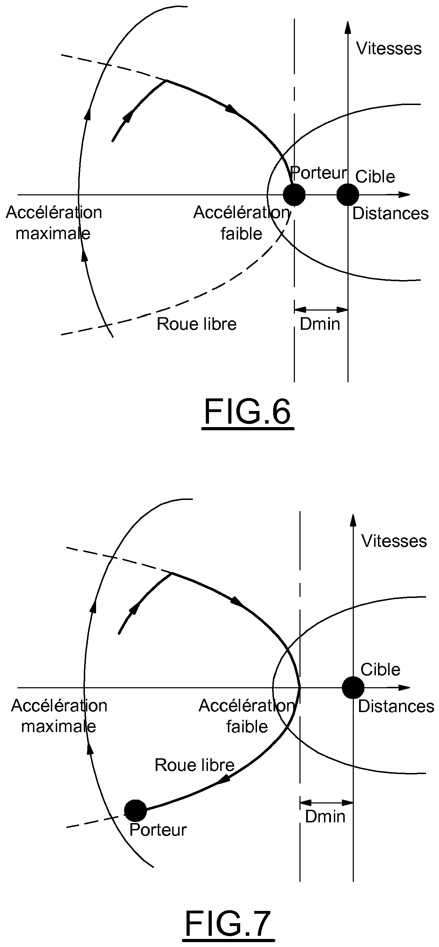

Sur la figure 6, le véhicule porteur se trouve alors positionné, par rapport à la cartographie, à la distance de sécurité Dmin. Le système de commande 1 va continuer à laisser le véhicule en roue libre pour optimiser la consommation en carburant.

Sur la figure 7, le système de commande 1 laisse le véhicule sur la courbe de roue libre jusqu'à ce que les conditions de vitesse du porteur et de distance porteur-cible correspondent au point de croisement de la courbe de roue libre et de la courbe d'accélération maximale, déterminée lors de l'élaboration du système de commande 1. Sur cette portion de cartographie, la vitesse du porteur a diminuée et est devenue inférieure à celle du véhicule cible, augmentant ainsi la distance séparant le véhicule porteur du véhicule cible.

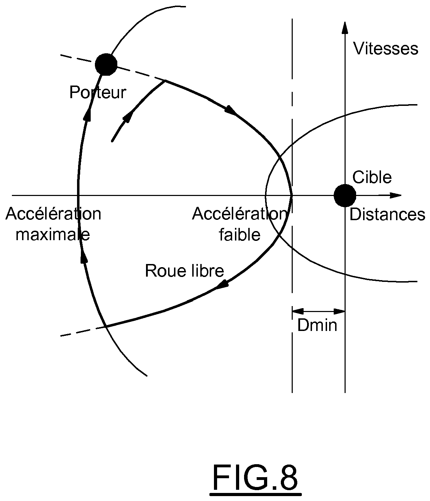

Comme indiqué sur la figure 8, le système de commande 1 applique alors une consigne de ré-accélération au véhicule porteur lorsque celui-ci atteint cette distance maximale et que la vitesse du porteur est inférieure à la vitesse du véhicule cible, l'enfoncement de la pédale d'accélérateur étant toujours constant et égal à 20%. L'accélération correspond à l'accélération réelle du véhicule pour 20% d'enfoncement sur la pédale d'accélérateur. La vitesse du porteur devient à nouveau supérieure à la vitesse de la cible et donc la distance entre la cible et le porteur tend à nouveau à diminuer. Comme précédemment lorsque le point d'intersection de la courbe d'accélération et de la courbe de roue libre sera atteint, le système de commande 1 remettra le véhicule porteur en roue libre.

Il est à noter que le système ne fait jamais accélérer le véhicule d'une valeur plus élevée que la valeur correspondant à la volonté du conducteur. Le système aura tendance à réaliser de grandes oscillations autour d'une vitesse fixe si la cible roule à vitesse constante. Le choix des valeurs de la distance admissible dépendra principalement du compromis entre le gain en consommation et le confort cherché par le système.

Il existe de nombreuses variantes de ce système, car si on privilégie d'optimiser le rejet d'émissions polluantes, les cartographies changeront. De la même façon, on peut penser réaliser un système privilégiant le confort en limitant les accélérations sans optimiser la consommation. Les stratégies étant basées sur les cartographies à mettre au point à partir de roulages peuvent être modifiées de multiples façons si le but recherché diffère.

## Revendications

1. Système de commande (1) du couple moteur d'un véhicule automobile pour l'optimisation de la consommation en carburant dudit véhicule, comprenant au moins un capteur de détection frontale (7) pour la détection d'un véhicule précédant le véhicule équipé dudit système de commande (1), **caractérisé en ce qu'**il comprend des moyens de calcul (9) aptes à déterminer une consigne de couple moteur optimisant la consommation en carburant (Co) à partir d'une consigne de couple moteur souhaité par le conducteur (Cc) et de variables représentatives d'un contexte de roulage issues du capteur de détection frontale (7).

2. Système selon la revendication 1, **caractérisé en ce qu'**il comprend en outre des moyens d'arbitrage (6) aptes à sélectionner une consigne finale (Cf) de couple moteur à appliquer parmi une consigne de couple moteur souhaité par le conducteur (Cc) et la consigne de couple moteur optimisant la consommation de carburant (Co).

3. Système selon l'une des revendications 1 ou 2, **caractérisé en ce qu'**il comprend des moyens de conversion (3) aptes à convertir un enfoncement de la pédale d'accélération (2) pour élaborer ladite consigne de couple moteur souhaité par le conducteur (Cc).

4. Système selon l'une des revendications 1 à 3, **caractérisé en ce que** les moyens d'arbitrage (6) comprennent des moyens de lissage (77) de la consigne finale (Cf) de couple moteur aptes à réduire les à-coups lors d'une désactivation du système de commande (1) du couple moteur par le conducteur.

5. Système selon l'une des revendications 1 à 4, **caractérisé en ce que** les moyens d'arbitrage (6) comprennent un premier moyen de comparaison (17) apte à comparer la différence entre la consigne de couple moteur souhaité par le conducteur (Cc) et la consigne du couple moteur optimisant la consommation en carburant par rapport à la volonté du conducteur (Co) à une première constante donnée (Seuil1), un second moyen de comparaison (18) apte à comparer la consigne de couple moteur souhaité par le conducteur (Cc) et la consigne du couple moteur optimisant la consommation en carburant par rapport à la volonté du conducteur (Co), un troisième moyen de comparaison (19) apte à comparer la vitesse d'enfoncement de la pédale d'accélération (2) à une première vitesse d'enfoncement donnée (Seuil2), et des moyens (50) de détermination d'enfoncement de pédale aptes à déterminer que le conducteur enfonce la pédale d'accélération (2) à une vitesse inférieure à la première vitesse d'enfoncement donnée (Seuil2) mais supérieure à une deuxième vitesse d'enfoncement donnée (Seuil3) durant au moins deux cycles d'échantillonnage de manière à désactiver le système de commande du couple moteur.

6. Système selon l'une des revendications 1 à 5, **caractérisé en ce que** la consigne finale lissée (Cf_lissée) de couple moteur à appliquer issue des moyens d'arbitrage (6) est transformée en données exploitables par des moyens matériels du moteur.

7. Système selon l'une des revendications 1 à 6, **caractérisé en ce qu'**il comprend des moyens de désactivation manuelle aptes à désactiver le système de commande du couple moteur.

8. Procédé de commande du couple moteur d'un véhicule automobile pour l'optimisation de la consommation en carburant dudit véhicule, dans lequel on détecte un véhicule précédant le véhicule équipé d'un système de commande (1) de couple moteur, on mesure des variables représentatives d'un contexte de roulage du véhicule précédent le véhicule équipé dudit système de commande (1), on mesure le taux d'enfoncement de la pédale d'accélération (2), on calcule une consigne de couple moteur souhaité par le conducteur (Cc) en fonction de l'enfoncement de la pédale d'accélération (2), on détermine une consigne de couple moteur optimisant la consommation de carburant par rapport à la volonté du conducteur (Co), et l'on sélectionne la consigne finale (Cf) de couple moteur à appliquer parmi la consigne de couple moteur souhaité par le conducteur (Cc) et la consigne de couple moteur optimisant la consommation de carburant par rapport à la volonté du conducteur (Co).

9. Procédé selon la revendication 8, dans lequel on réalise la sélection de consigne finale (Cf) de couple moteur seulement si un véhicule précédant le véhicule équipé dudit système est détecté.

10. Procédé selon l'une des revendications 8 ou 9, dans lequel on désactive la commande du couple moteur si une condition prédéterminée est satisfaite.

11. Procédé selon l'une des revendications 8 ou 9, dans lequel on désactive la commande du couple moteur si la pédale de frein est enfoncée, ou si le clignotant gauche est actionné, ou si la pédale d'accélérateur est enfoncée brusquement, ou si aucun véhicule n'est détecté.

## Patentansprüche

1. System zur Steuerung (1) des Antriebsdrehmoments eines Kraftfahrzeugs zur Optimierung des Kraftstoffverbrauchs des Fahrzeugs, welches wenigstens einen Frontalerfassungssensor (7) zur Erfassung eines Fahrzeugs, das dem mit dem System zur Steuerung (1) ausgerüsteten Fahrzeug vorausfährt, umfasst, **dadurch gekennzeichnet, dass** es Berechnungsmittel (9) umfasst, die geeignet sind, einen Sollwert des Antriebsdrehmoments, das den Kraftstoffverbrauch optimiert (Co), aus einem Sollwert des vom Fahrer gewünschten Antriebsdrehmoments (Cc) und aus für eine Fahrsituation repräsentativen Variablen, die von dem Frontalerfassungssensor (7) stammen, zu bestimmen.

2. System nach Anspruch 1, **dadurch gekennzeichnet, dass** es außerdem Arbitragemittel (6) umfasst, die geeignet sind, einen endgültigen Sollwert (Cf) des anzuwendenden Antriebsdrehmoments aus einem Sollwert des vom Fahrer gewünschten Antriebsdrehmoments (Cc) und dem Sollwert des Antriebsdrehmoments, das den Kraftstoffverbrauch optimiert (Co), auszuwählen.

3. System nach einem der Ansprüche 1 oder 2, **dadurch gekennzeichnet, dass** es Umwandlungsmittel (3) umfasst, die geeignet sind, ein Durchtreten des Gaspedals (2) umzuwandeln, um den Sollwert des vom Fahrer gewünschten Antriebsdrehmoments (Cc) zu ermitteln.

4. System nach einem der Ansprüche 1 bis 3, **dadurch gekennzeichnet, dass** die Arbitragemittel (6) Mittel zur Glättung (77) des endgültigen Sollwerts (Cf) des Antriebsdrehmoments umfassen, die geeignet sind, die Ruckbewegungen bei einer Deaktivierung des Systems zur Steuerung (1) des Antriebsdrehmoments durch den Fahrer zu reduzieren.

5. System nach einem der Ansprüche 1 bis 4, **dadurch gekennzeichnet, dass** die Arbitragemittel (6) umfassen: ein erstes Vergleichsmittel (17), das geeignet ist, die Differenz zwischen dem Sollwert des vom Fahrer gewünschten Antriebsdrehmoments (Cc) und dem Sollwert des Antriebsdrehmoments, das den Kraftstoffverbrauch im Hinblick auf den Willen des Fahrers optimiert (Co), mit einer gegebenen ersten Konstante (Seuil1) zu vergleichen, ein zweites Vergleichsmittel (18), das geeignet ist, den Sollwert des vom Fahrer gewünschten Antriebsdrehmoments (Cc) und den Sollwert des Antriebsdrehmoments, das den Kraftstoffverbrauch im Hinblick auf den Willen des Fahrers optimiert (Co), zu vergleichen, ein drittes Vergleichsmittel (19), das geeignet ist, die Geschwindigkeit des Durchtretens des Gaspedals (2) mit einer gegebenen ersten Geschwindigkeit des Durchtretens (Seuil2) zu vergleichen, und Mittel (50) zur Bestimmung des Durchtretens des Pedals, die geeignet sind zu bestimmen, dass während wenigstens zweier Abtastzyklen der Fahrer das Gaspedal (2) mit einer Geschwindigkeit durchtritt, die kleiner als die gegebene erste Geschwindigkeit des Durchtretens (Seuil2), jedoch größer als eine gegebene zweite Geschwindigkeit des Durchtretens (Seuil3) ist, um das System zur Steuerung des Antriebsdrehmoments zu deaktivieren.

6. System nach einem der Ansprüche 1 bis 5, **dadurch gekennzeichnet, dass** der von den Arbitragemitteln (6) ausgegebene geglättete endgültige Sollwert (Cf_geglättet) des anzuwendenden Antriebsdrehmoments in Daten umgewandelt wird, die durch Hardwaremittel des Motors verwertbar sind.

7. System nach einem der Ansprüche 1 bis 6, **dadurch gekennzeichnet, dass** es Mittel zur manuellen Deaktivierung umfasst, die geeignet sind, das System zur Steuerung des Antriebsdrehmoments zu deaktivieren.

8. Verfahren zur Steuerung des Antriebsdrehmoments eines Kraftfahrzeugs zur Optimierung des Kraftstoffverbrauchs des Fahrzeugs, wobei ein Fahrzeug erfasst wird, das dem mit einem System zur Steuerung (1) des Antriebsdrehmoments ausgerüsteten Fahrzeug vorausfährt, Variable gemessen werden, die für eine Fahrsituation des Fahrzeugs repräsentativ sind, das dem mit dem System zur Steuerung (1) ausgerüsteten Fahrzeug vorausfährt, der Grad des Durchtretens des Gaspedals (2) gemessen wird, ein Sollwert des vom Fahrer gewünschten Antriebsdrehmoments (Cc) in Abhängigkeit von dem Durchtreten des Gaspedals (2) berechnet wird, ein Sollwert des Antriebsdrehmoments bestimmt wird, das den Kraftstoffverbrauch im Hinblick auf den Willen des Fahrers optimiert (Co), und der endgültige Sollwert (Cf) des anzuwendenden Antriebsdrehmoments aus dem Sollwert des vom Fahrer gewünschten Antriebsdrehmoments (Cc) und dem Sollwert des Antriebsdrehmoments, das den Kraftstoffverbrauch im Hinblick auf den Willen des Fahrers optimiert (Co), ausgewählt wird.

9. Verfahren nach Anspruch 8, wobei die Auswahl des endgültigen Sollwertes (Cf) des Antriebsdrehmoments nur durchgeführt wird, falls ein Fahrzeug erfasst wird, das dem mit dem System ausgerüsteten Fahrzeug vorausfährt.

10. Verfahren nach einem der Ansprüche 8 oder 9, wobei die Steuerung des Antriebsdrehmoments deaktiviert wird, falls eine vorbestimmte Bedingung erfüllt ist.

11. Verfahren nach einem der Ansprüche 8 oder 9, wobei die Steuerung des Antriebsdrehmoments deaktiviert wird, falls das Bremspedal niedergetreten wird oder falls der linke Blinker betätigt wird oder falls das Gaspedal abrupt durchgetreten wird oder falls kein Fahrzeug erfasst wird.

## Claims

1. System (1) for controlling the engine torque of a motor vehicle for optimising the fuel consumption of said vehicle, comprising at least one front detection sensor (7) for detecting a vehicle in front of the vehicle equipped with said control system (1), **characterized in that** it comprises calculation means (9) that are able to determine an engine torque setpoint that optimizes fuel consumption (Co) from an engine torque setpoint desired by the driver (Cc) and from variables that are representative of a driving context proceeding from the front detection sensor (7).

2. System according to Claim 1, **characterized in that** it further comprises arbitration means (6) that are able to select a final engine torque setpoint (Cf) to be applied, from among an engine torque setpoint desired by the driver (Cc) and the engine torque setpoint that optimizes fuel consumption (Co).

3. System according to one of Claims 1 and 2, **characterized in that** it comprises conversion means (3) that are able to convert pressure on the acceleration pedal (2) in order to identify said engine torque setpoint desired by the driver (Cc).

4. System according to one of Claims 1 to 3, **characterized in that** the arbitration means (6) comprise means (77) for smoothing the final engine torque setpoint (Cf) that are able to reduce abrupt changes when the engine torque control system (1) is deactivated by the driver.

5. System according to one of Claims 1 to 4, **characterized in that** the arbitration means (6) comprise a first comparison means (17) that is able to compare the difference between the engine torque setpoint desired by the driver (Cc) and the engine torque setpoint that optimizes fuel consumption with respect to the desire of the driver (Co) with a first given constant (Seuil1), a second comparison means (18) that is able to compare the engine torque setpoint desired by the driver (Cc) and the engine torque setpoint that optimizes fuel consumption with respect to the desire of the driver (Co), a third comparison means (19) that is able to compare the rate of pressing on the accelerator pedal (2) with a first given rate of pressing (Seuil2), and means (50) for determining the degree to which the pedal has been pressed, which means are able to determine that the driver is pressing on the accelerator pedal (2) at a rate below the first given rate of pressing (Seuil2) but greater than a second given rate of pressing (Seuil3) during at least two sampling cycles, so as to deactivate the engine torque control system.

6. System according to one of Claims 1 to 5, **characterized in that** the final smoothed engine torque setpoint (Cf_lissée) to be applied, sent from the arbitration means (6), is transformed into data that can be used by material means of the engine.

7. System according to one of Claims 1 to 6, **characterized in that** it comprises manual deactivation means that are able to deactivate the engine torque control system.

8. Method for controlling the engine torque of a motor vehicle for optimising the fuel consumption of said vehicle, which involves detecting a vehicle in front of the vehicle equipped with an engine torque control system (1), measuring variables that are representative of a driving context of the vehicle in front of the vehicle equipped with said control system (1), measuring the degree to which the accelerator pedal (2) is pressed, calculating an engine torque setpoint desired by the driver (Cc) depending on the degree to which the accelerator pedal (2) is pressed, determining an engine torque setpoint that optimizes fuel consumption with respect to the desire of the driver (Co), and selecting the final engine torque setpoint (Cf) that is to be applied from among the engine torque setpoint desired by the driver (Cc) and the engine torque setpoint that optimizes fuel consumption with respect to the desire of the driver (Co).

9. Method according to Claim 8, which involves selecting the final engine torque setpoint (Cf) only if a vehicle is detected in front of the vehicle equipped with said system.

10. Method according to one of Claims 8 and 9, which involves deactivating the engine torque control if a predetermined condition is satisfied.

11. Method according to one of Claims 8 and 9, which involves deactivating the engine torque control if the brake pedal is pressed, or if the left indicator is activated, or if the accelerator pedal is pressed suddenly, or if no vehicle is detected.
